# EUROPEAN PATENT APPLICATION

(11) **EP 4 093 022 A1**
(43) Date of publication of application: **23.11.2022**
(21) Application number: 20913766.0
(22) Date of filing: 11.12.2020
(51) Int. Cl.: H04N 7/18, H04N 5/77, G03B 15/00, B64C 39/02

(54) **METHOD, APPARATUS, AND SYSTEM FOR MANAGING IMAGE CAPTURED BY DRONE**

(30) Priority: 15.01.2020 KR 20200005202
(71) Applicant: FORDRONE CO., LTD., Jeollanam-do 58217 (KR); Kim, Won Kug, Andong-si, Gyeongsangbuk-do 36600 (KR); Shin, Jin Kyo, Seongnam-si, Gyeonggi-do 13289 (KR); Kim, Kwang Rae, Seoul 03680 (KR)
(72) Inventor: KIM, Won Kug, Andong-si Gyeongsangbuk-do 36600 (KR); SHIN, Jin Kyo, Seongnam-si Gyeonggi-do 13289 (KR); KIM, Kwang Rae, Seoul 03680 (KR)
(74) Representative: Gulde & Partner
(86) International application number: PCT/KR2020/018125
(87) International publication number: WO 2021/145565

(57) **Abstract**

Provided is a system for managing an image captured by a drone, the system including a drone configured to capture an image of a subject, generate image information about a captured image, and transmit an image and image information by wired or wireless communication, an image management apparatus configured to receive the image and the image information from the drone, store the received image and image information, analyze whether the image includes personal information, and transmit the image information by wired or wireless communication, and a personal information protection target configured to receive the image information from the image management apparatus, and transmit a read signal of reading the image information to the image management apparatus by wired or wireless communication.

## Description

### TECHNICAL FIELD

The present disclosure relates to a method, apparatus, and system for managing an image captured by a drone.

### BACKGROUND ART

Generally, drones, or called unmanned aerial vehicles, refer to airplane- or helicopter-shaped flying objects that fly by being induced by wireless waves without a person on board. Drones have been recently used in various industrial fields. Conventionally, drones have been used for military and personal hobby purposes, but recently, the scope of usability thereof has widened to transportation and movies or and broadcast industries.

Also, drones having various sizes and performances have been variously developed depending on the purpose of use. In particular, drones are sometimes deployed and operated in areas inaccessible to humans, such as jungles, remote areas, volcanic areas, natural disaster areas, nuclear power plant accident areas, and the like.

Furthermore, drones can move freely and quickly along a preset path and remotely monitor a specific area through a camera or a sensor mounted thereon. Drones are connected to a control device or a pilot's terminal in a wired or wireless manner and capture an image or video of a desired area by flying according to a command transmitted from the control device or the pilot's terminal.

However, unlike other objects running on the ground, drones do not have restrictions on their movement range. Also, as drones are deployed in a wide area and flies freely in the air, the drones are invisible to people's eyes.

Accordingly, when an image captured by an unmanned flying object is not managed, there is a possibility that privacy of the public exposed to the captured image may be infringed. Furthermore, the public exposed to the captured image may not even recognize that the image has been captured.

Thus, when an image is captured by a drone, it is necessary to manage the image so that personal information is not infringed by analyzing whether personal information is included in the captured image.

### DESCRIPTION OF EMBODIMENTS

### TECHNICAL PROBLEM

Provided are a method, apparatus, and system for managing an image captured by a drone, by which the image captured by a drone may be managed so that personal information is not infringed.

Furthermore, provided are a method, apparatus, and system for managing an image captured by a drone, by which personal information may be managed not to be infringed by opening to the public information about the image captured by a drone.

Furthermore, provided are a method, apparatus, and system for managing an image captured by a drone, by which personal information may be managed not to be infringed by notifying one who needs to protect personal information of the image captured by a drone.

Furthermore, provided are a method, apparatus, and system for managing an image captured by a drone, by which personal information may be managed not to be infringed by protecting personal information in the image captured by a drone according to the request of one who needs to protect personal information.

The technical objectives to be achieved by the disclosure are not limited to the above-described objectives, and other technical objectives that are not mentioned herein would be clearly understood by a person skilled in the art from the description of the present invention.

### SOLUTION TO PROBLEM

According to an embodiment of the present disclosure, a system for managing an image captured by a drone includes a drone configured to capture an image of a subject, generate image information about a captured image, and transmit an image and image information by wired or wireless communication, an image management apparatus configured to receive the image and the image information from the drone, store the received image and image information, analyze whether the image includes personal information, and transmit the image information by wired or wireless communication, and a personal information protection target configured to receive the image information from the image management apparatus, and transmit a read signal of reading the image information to the image management apparatus by wired or wireless communication.

In an embodiment, the drone may be further configured to generate capturing information and flight information and transmit the generated capturing information and flight information by wired or wireless communication.

In an embodiment, the capturing information may include at least one selected from the group consisting of a capturing location, a capturing time, and a capturing direction.

In an embodiment, the flight information may include at least one selected from the group consisting of a flight location, a camera direction, an angle, a location of a pilot, an azimuth, a speed, acceleration, a rotation angle, take-off, landing, a flight path, a flight time, an altitude, and the like of the drone.

In an embodiment, the drone may be further configured to receive a read signal of the personal information protection target from the image management apparatus.

In an embodiment, the image management apparatus may be further configured to receive a read signal from the personal information protection target and transmit the received read signal to the drone.

In an embodiment, when it is analyzed that the image does not include personal information, the image management apparatus may be further configured to transmit an analysis result to the drone.

In an embodiment, when it is analyzed that the image includes personal information, the image management apparatus may be further configured to transmit the image including the personal information to the personal information protection target.

In an embodiment, after checking the image information, the personal information protection target may be further configured to receive an image from the image management apparatus to check whether the image includes personal information.

In an embodiment, the personal information protection target may be further configured to pass in advance an authentication process of the image management apparatus to receive an image from the image management apparatus.

In an embodiment, when the received image includes personal information, the personal information protection target may be further configured to transmit a personal information processing signal about personal information processing to the image management apparatus.

In an embodiment, the personal information processing signal may include at least one selected from the group consisting of deletion processing, masking processing, mosaic processing, and blurring processing of the personal information.

In an embodiment, the image management apparatus may be further configured to transmit an image processed according to the personal information processing signal received from the personal information protection target, to the personal information protection target.

In an embodiment, when the received image does not include personal information, the personal information protection target may be further configured to transmit a personal information non-inclusion signal about personal information non-inclusion to the image management apparatus.

In an embodiment, the personal information non-inclusion signal may include not transmitting the personal information non-inclusion signal to the image management apparatus.

According to another embodiment of the present disclosure, an apparatus for managing an image captured by a drone includes a communication unit configured to transceive information with respect to a drone and a personal information protection target by wired or wireless communication, a collection unit configured to collect an image of capturing a subject and image information about the image from the drone, and collect a read signal of reading the image information from the personal information protection target, an analysis unit configured to analyze whether the image includes personal information, a storage unit configured to store the image, the image information, an analysis result, and the read signal, and a controller configured to control the communication unit, the collection unit, the analysis unit, and the storage unit.

In an embodiment, the collection unit may be further configured to receive capturing information and flight information from drone.

In an embodiment, the capturing information may include at least one selected from the group consisting of a capturing location, a capturing time, and a capturing direction.

In an embodiment, the flight information may include at least one selected from the group consisting of a flight location, a camera direction, an angle, a location of a pilot, an azimuth, a speed, acceleration, a rotation angle, take-off, landing, a flight path, a flight time, an altitude, and the like of the drone.

In an embodiment, when the analysis unit analyzes that the image does not include personal information, the controller may be further configured to allow the analysis result to be transmitted to the drone.

In an embodiment, when the analysis unit analyzes that the image includes personal information, the controller may be further configured to allow the image including the personal information to be transmitted to the personal information protection target.

In an embodiment, the controller may be further configured to control such that capturing information and flight information are found according to a search condition through a terminal screen of the personal information protection target, and to perform an integral management on processing of image information displayed on the terminal of the personal information protection target.

In an embodiment, the search condition of the capturing information and the flight information may include at least any one of a specific time, a specific location, and unique code information of the drone.

In an embodiment, the apparatus may further include an authentication unit configured to authenticate subscriber information received from the personal information protection target, and authenticate a read signal to check a right to read.

In an embodiment, the authentication unit may be further configured to determine the right to read by comparing reading information including location information and a request time of the personal information protection target with the capturing information of the drone.

In an embodiment, the apparatus may further include a processing unit configured to process an image according to a personal information processing signal about processing of the personal information included in the image, the personal information processing signal being received by the communication unit from the personal information protection target.

In an embodiment, the personal information processing signal may include at least one selected from the group consisting of deletion processing, masking processing, mosaic processing, and blurring processing of the personal information.

According to another embodiment of the present disclosure, a method of managing an image captured by a drone includes capturing an image of a subject, generating image information about a captured image, and receiving the image and the image information from the drone that transmits the image and the image information by wired or wireless communication, generating an analysis result of analyzing whether the image received from the drone includes personal information, storing the image, the image information, and the analysis result, and transmitting the image information and the analysis result to a personal information protection target by wired or wireless communication.

In an embodiment, the method may further include, when the analysis result includes that the image includes personal information, transmitting the image including the personal information to the personal information protection target.

In an embodiment, the method may further include authenticating subscriber information received from the personal information protection target, and authenticate a read signal to check a right to read.

In an embodiment, the authenticating of the read signal may include determining the right to read by comparing reading information including location information and a request time of the personal information protection target with the capturing information of the drone.

In an embodiment, the method may further include receiving a personal information processing signal about processing of the personal information included in the image from the personal information protection target.

In an embodiment, the personal information processing signal may include at least one selected from the group consisting of deletion processing, masking processing, mosaic processing, and blurring processing of the personal information.

### ADVANTAGEOUS EFFECTS OF DISCLOSURE

The effects of the present disclosure include a method, apparatus, and system for managing an image captured by a drone, by which an image captured by a drone is managed so that personal information is not infringed.

The effects of the present disclosure include a method, apparatus, and system for managing an image captured by a drone, by which personal information is managed not to be infringed by opening to the public the information about an image captured by a drone.

The effects of the present disclosure include a method, apparatus, and system for managing an image captured by a drone, by which personal information is managed not to be infringed by notifying one who needs to protect personal information of an image captured by a drone.

The effects of the present disclosure include a method, apparatus, and system for managing an image captured by a drone, by which personal information is managed not to be infringed by protecting personal information in the image captured by a drone according to the request of one who needs to protect personal information.

The effects of the present disclosure are not limited to the contents disclosed herein, and other various effects that are not mentioned herein would be clearly understood by a person skilled in the art from the description of the present disclosure.

### BRIEF DESCRIPTION OF DRAWINGS

FIG. 1 is a conceptual view of a system for managing an image captured by a drone, according to an embodiment of the present disclosure.
FIG. 2 is a conceptual view of a system for managing an image captured by a drone, according to an embodiment of the present disclosure.
FIG. 3 is a conceptual view showing a method of managing an image captured by a drone, according to an embodiment of the present disclosure.

### MODE OF DISCLOSURE

The disclosure will now be described more fully with reference to the accompanying drawings, in which embodiments of the disclosure are shown. The disclosure may, however, be embodied in many different forms and should not be construed as being limited to the embodiments set forth herein; rather, these embodiments are provided so that this disclosure will be thorough and complete, and will fully convey the concept of the disclosure to those skilled in the art.

Furthermore, terms used in the specification are used for explaining a specific embodiment, not for limiting the disclosure. The expression of singularity in the specification includes the expression of plurality unless clearly specified otherwise in context. The suffix "portion" for the components used in this specification is given or mixed in consideration of the ease of writing the specification, and does not have a distinct meaning or role by itself.

In the present specification, terms such as "include" or "comprise" may be construed to denote a certain characteristic, number, step, operation, constituent element, or a combination thereof, but may not be construed to exclude the existence of or a possibility of addition of one or more other characteristics, numbers, steps, operations, constituent elements, or combinations thereof.

It is to be understood that the drawings herein are illustrative of the embodiments of the principles of the present disclosure and represent conceptual views. That is, it should be understood that the functions shown in the drawings may be substantially represented on a computer-readable medium and carried out in various processes performed by a computer or processor, whether or not the computer or processor is explicitly shown.

In addition, each function may be provided by the use of hardware capable of executing software in association with appropriate software as well as dedicated hardware. When provided by a processor, the above function may be provided by a single dedicated processor, a single shared processor, or a plurality of separate processors, some of which may be shared.

In the following description, when detailed descriptions about related well-known functions or structures are determined to make the gist of the disclosure unclear, the detailed descriptions will be omitted herein.

### (Embodiment 1)

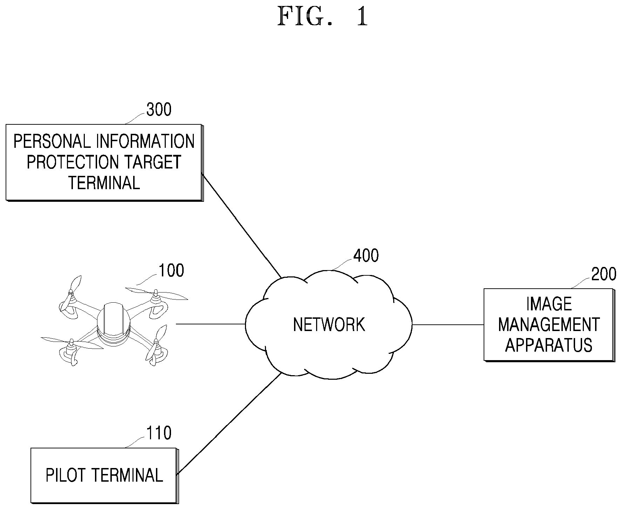

A system for managing an image captured by a drone, according to an embodiment of the present disclosure include, as exemplarily shown in FIG. 1, a drone 100, an image management apparatus 200, and a personal information protection target terminal 300. The system for managing an image captured by a drone, according to the present embodiment may further include a pilot terminal 110 and a network 400. Here, the personal information protection target terminal 300 may mean a personal information protection target itself.

The drone 100 is remotely controllable through the pilot terminal 110 without a person on board. The drone 100 captures an image of a subject through a camera (not shown), and generates image information about a captured image. Furthermore, the drone 100 may generate capturing information. The drone 100 may detect and generate flight information through an inertial measurement unit (IMU), a global navigation satellite system (GNSS) module, and the like, including a sensor, for example, an acceleration sensor, a gyro sensor, a geomagnetic field sensor, and an altimeter sensor. The drone 100 transceives a control signal and a state signal through radio waves, and transmit image information through at least one channel. Furthermore, the drone 100 may broadcast the capturing information and/or the flight information.

Here, the image information may include an image captured by the camera mounted on the drone 100. The capturing information includes at least one of the direction of a camera (capturing direction), a capturing location, a capturing time, a capturing quality, and the like. The flight information includes at least one of a flight location, a camera direction, an angle (field of view), the location of a pilot (capturer), an azimuth, a speed, acceleration, a rotation angle, take-off, landing, a flight path, a flight time, an altitude, and the like of the drone 100.

The image information and the capturing information generated by the drone 100 may be transmitted to at least one of the pilot terminal 110, the image management apparatus 200, and the personal information protection target terminal 300, by wireless communication. The image information and the capturing information generated by the drone 100 may be stored inside the drone 100 by itself.

The flight information generated by the drone 100 may be transmitted to at least one of the pilot terminal 110, a requester terminal 100, and an operator server 300, through wireless communication. According to another embodiment, the flight information detected by the drone 100 may be stored inside the drone 100 by itself.

The pilot terminal 110 is a terminal to fly the drone 100 remotely or control or fly any one of functions of the drone 100. For example, the pilot terminal 110 may include an ultra-high frequency (UHF) transceiver, a very high frequency (VHF) transceiver, a third generation (3G) transceiver, a fourth generation (4G) transceiver, a fifth generation (5G) transceiver, and the like, which transceives data at the same frequency to fly the drone 100 remotely.

The pilot terminal 110 may include all types of wired or wireless communication apparatuses that can access the image management apparatus 200 via the network 400 and use various web services from the image management apparatus 200.

The image management apparatus 200 may receive an image and image information from the drone 100, store the received image and image information, analyze whether the image includes personal information, and transmit the image information by wired or wireless communication. Accordingly, the image captured by the drone 100 may be managed so that personal information is not infringed.

The image management apparatus 200 may perform a function to provide various online services through a specific webpage or application.

For example, the image management apparatus 200 may collect the image information, capturing information, and flight information generated by the drone 100 from the pilot terminal 110 and provide in real time to the personal information protection target terminal 300. The image management apparatus 200 may receive a read signal of image information from the personal information protection target through the personal information protection target terminal 300. When it is analyzed that the image does not include personal information, the image management apparatus 200 may transmit an analysis result to the drone 100 or the pilot terminal 110. When it is analyzed that the image includes personal information, the image management apparatus 200 may transmit the image including the personal information to the personal information protection target through the personal information protection target terminal 300. When the personal information protection target requests deletion processing or masking processing on the image captured at a specific time and a specific location, through the personal information protection target terminal 300, the image management apparatus 200 may perform deletion processing or masking processing on the image.

In an embodiment of the present disclosure, the image management apparatus 200 is described to be independently provided, as an example. However, the present disclosure is not limited thereto, and at least part of the function of the image management apparatus 200 may be provided inside the drone 100 or integrally provided inside the pilot terminal 110.

The personal information protection target receives image information from the image management apparatus 200 through the personal information protection target terminal 300. Accordingly, the personal information protection target may determine whether to receive an image from the image management apparatus 200 to check whether the image includes personal information, by checking the received image information through reading and the like.

The personal information protection target terminal 300 may receive a webpage or an application from the image management apparatus 200. The personal information protection target may access a webpage or application through the personal information protection target terminal 300 to search in real time for the image information of the drone 100 provided through the image management apparatus 200, and additionally search in real time for the capturing information and the flight information.

The personal information protection target reads the received image information and then transmits a read signal of reading the image information to the image management apparatus 200 through the personal information protection target terminal 300. Accordingly, the image management apparatus 200 checks that the personal information protection target has read the received image information and transmits to the drone 100 or the pilot terminal 110.

After reading the image information, the personal information protection target may receive an image from the image management apparatus 200 through the personal information protection target terminal 300, to check whether the image includes personal information. To receive an image from the image management apparatus 200, the personal information protection target may go through an authentication process of the image management apparatus 200 in advance to receive the image. Accordingly, by checking whether the personal information protection target to receive an image is a legitimate subject, the image management apparatus 200 may prevent the image from being transmitted to an illegitimate subject in advance. However, the disclosure is not limited thereto, and the personal information protection target may not go through the authentication process of the image management apparatus 200 in advance to receive an image from the image management apparatus 200.

When the received image includes personal information, the personal information protection target may transmit a personal information processing signal about processing personal information to the image management apparatus 200. Accordingly, the personal information protection target may request personal information protection processing, by itself, so that the personal information included in the image is not infringed.

The image management apparatus 200 may transmit an image processed according to a personal information processing signal received from the personal information protection target terminal 300 to the personal information protection target terminal 300 so that the personal information protection target can check a personal information processing result.

Here, the personal information protection processing may include at least one selected from the group consisting of deletion processing, masking processing, mosaic processing, and blurring processing of personal information.

For example, when an image including the personal information protection target is found through the personal information protection target terminal 300, the personal information protection target may request the image management apparatus 200 the deletion processing of the image through the personal information protection target terminal 300. Furthermore, when an image including the personal information protection target is found through the personal information protection target terminal 300, the personal information protection target may request masking processing of the image.

Here, "masking" may refer to processing, for example, shadow processing, mosaic processing, and the like, to prevent exposure of a part of an image, in which the personal information protection target is captured as a subject, of the entire image captured by the drone 100.

When the received image does not include personal information, the personal information protection target may transmit a personal information non-inclusion signal about personal information non-inclusion to the image management apparatus 200 through the personal information protection target terminal 300. Accordingly, by transmitting the received personal information non-inclusion signal to the pilot terminal 110, the image management apparatus 200 may confirm that the image captured by the drone 100 is a legitimate image that does not infringe privacy.

The personal information protection target terminal 300 accesses the image management apparatus 200 via the network 400 so that a bidirectional communication therebetween is possible. The personal information protection target terminal 200 may accesses the drone 100 and the pilot terminal 110 via the network 400 to perform communication.

The personal information protection target terminal 200 may include a mobile terminal, such as a cellular phone, a personal communications services phone (PCS phone), synchronous/asynchronous IMT-2000 (International Mobile Telecommunication-2000), and the like, which communicates via the wireless Internet or the mobile Internet. In addition, the personal information protection target terminal 200 may collectively include all wired/wireless home appliances/communication apparatuses having an interface to access a webserver, such as a palm personal computer (Palm PC), a personal digital assistant (PDA), a smartphone, a wireless application protocol phone (WAP phone), a mobile game console (mobile play-station), a PDA phone or a digital multimedia broadcasting (DMB) phone with a communication function, a tablet PC, an iPad, and the like.

The network 400 connects the drone 100, the pilot terminal 110, the image management apparatus 200, and the personal information protection target terminal 300 to mutually perform a wireless communication. The network 400 provides an environment to allow a pilot of the pilot terminal 110 or a user of the personal information protection target terminal 300 to access the image management apparatus 200.

The network 400 may refer to a worldwide open-type computer network structure providing a TCP/IP protocol and various services existing in an upper layer thereof, that is, hypertext transfer protocol (HTTP), Telnet, a file transfer protocol (FTP), a domain name system (DNS), a simple mail transfer protocol (SMTP), a simple network management protocol (SNMP), a network file service (NFS), a network information service (NIS), and the like.

The network 400 may include wired or wireless Internet, and furthermore, a core network integrated with a wired public network, a wireless mobile communication network, a portable Internet, or the like.

Furthermore, the wireless communication may include a satellite communication, but the disclosure is not limited thereto. For example, the wireless communication may be configured to perform communication by a communication method selected from the group consisting of LAN, MAN (Metropolitan Area Network), GSM (Global System for Mobile Network), EDGE (Enhanced Data GSM Environment), HSDPA (High Speed Downlink Packet Access), W-CDMA (Wideband Code Division Multiple Access), CDMA (Code Division Multiple Access), TDMA (Time Division Multiple Access), Bluetooth, Zigbee, VoIP (Voice over Internet Protocol), LTE Advanced, IEEE80216m, wireless MAN-Advanced, HSPA+, 3GPP Long Term Evolution (LTE), Mobile WiMAX (IEEE 80216e), UMB (formerly EV-DO RevC), Flash-OFDM, iBurst and MBWA (IEEE 80220) systems, HIPERMAN, Beam-Division Multiple Access (BDMA), Wi-MAX (World Interoperability for Microwave Access) and communication using ultrasound.

### (Embodiment 2)

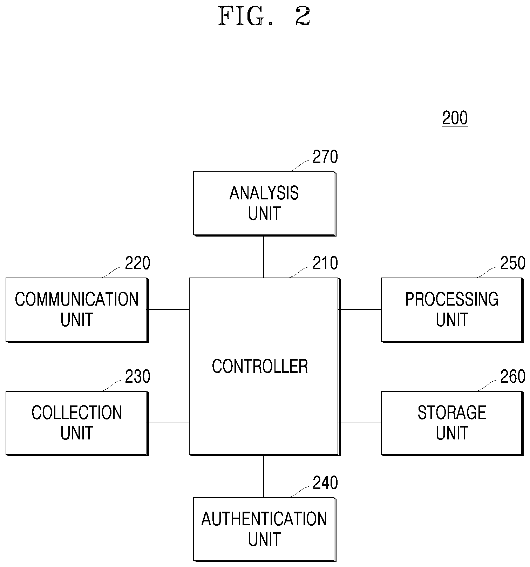

The image management apparatus 200 for managing an image captured by a drone, according to an embodiment of the present disclosure may include, as exemplarily shown in FIG. 2, a controller 210, a communication unit 220, a collection unit 230, a authentication unit 240, an image processing unit 250, a storage unit 260, and an analysis unit 270.

The controller 210 controls the overall operation of the image management apparatus 200 for managing an image captured by a drone. For example, when it is analyzed by the analysis unit 270 that the image does not include personal information, the controller 210 may allow an analysis result thereof to be transmitted to the drone 100 or the pilot terminal 110. Furthermore, when it is analyzed by the analysis unit 270 that the image includes personal information, the controller 210 may allow the image including the personal information to the personal information protection target.

The controller 210 may store the image information, capturing information and flight information collected by the collection unit 230 in the storage unit 260. The controller 210 may store information collected by uploading information afterwards in the storage unit 260 in non-real time.

The controller 210 may allow the personal information protection target to authenticate subscriber information of a subscriber who joined a service through the personal information protection target terminal 300. Here, service subscription may include not only membership subscription, but also a non-member log-in form using individual identification information, for example, a resident registration number, a cellular phone number, biometric information, and the like. The controller 210 may verify whether there is a right to read when the personal information protection target transmits a read signal through the personal information protection target terminal 300.

When receiving a read signal through the communication unit 220, the controller 210 may search for image information corresponding to the read signal and transmit the image information to the personal information protection target terminal 300 in real time. When receiving a personal information processing signal through the communication unit 220, the controller 210 may control the operation of the processing unit 250 to process the image. For example, when receiving a personal information processing signal, such as personal information deletion processing request signal, through the communication unit 220, the controller 210 may control the operation of the processing unit 250 to perform deletion processing on the image. Furthermore, when receiving a masking processing request signal, the controller 210 may control the operation of the processing unit 250 to perform masking processing on the image. The controller 210 may perform communication with the drone 100, the personal information protection target terminal 300, and the pilot terminal 110, through the communication unit 220.

When the personal information protection target has accessed, the controller 210 controls such that capturing information can be found for each search condition through a screen of the personal information protection target terminal 300. Here, the search condition may include a specific time, a specific location, unique code information of the drone 10, and the like.

The controller 210 performs integrated management about processing of an image and image information. For example, the controller 310 may perform capturing, collecting, creating, linking, interlocking, recording, storing, holding, processing, editing, searching, printing, screen displaying, correcting, restoring, using, providing, disclosing, destructing, deleting, enlarging, reducing, direction moving, log recording, electronic fingerprint generating, de-identifying, shielding, and the like of image information.

The controller 210 may manage deletion request, masking request, external transfer, backup management, violation review, search, viewing, setting change, accessible personnel (ID), personal information level, data tagging (tagging image data and personal information subject), tagging or not, tagging setting information, and the like.

The communication unit 220 is an apparatus that transceive information with respect to the drone 100 or the pilot terminal 110 by wired or wireless communication and transceive information with respect to the personal information protection target through the personal information protection target terminal 300 by wired or wireless communication.

For example, the communication unit 220 may receive a read signal and a request signal from the personal information protection target terminal 300 via the network 400 and transmit the received signals to the controller 210. The communication unit 220 may receive image information from the drone 100 or the pilot terminal 110 via the network 400 and transmit the received information to the controller 210. The communication unit 220 may receive flight information of the drone 100 from the drone 100 or the pilot terminal 110 via the network 400.

The collection unit 230 collects an image capturing a subject and image information about the image from the drone 100 or the pilot terminal 110, and collects a read signal of reading the image information from the personal information protection target through the personal information protection target terminal 200.

The collection unit 230 may further collect capturing information and flight information of the drone 100 received through the communication unit 220. The collection unit 230 may collect the received information in association with the unique code information of the drone 100.

Here, the capturing information may include at least one selected from the group consisting of a capturing location, a capturing time, and a capturing direction. The flight information may include at least one selected from the group consisting of a flight location, a camera direction, an angle, the location of a pilot, an azimuth, a speed, an acceleration, the angle of rotation, take-off, landing, a flight path, a flight time, and an altitude of a drone.

The authentication unit 240 authenticates subscriber information received from the personal information protection target through the personal information protection target terminal 200, and authenticates a read signal to check a right to read. For example, to authenticate a subscriber subscribing a service, the authentication unit 240 authenticates subscriber information from the personal information protection target through the personal information protection target terminal 200. Furthermore, to check the presence of a right to read the image, the authentication unit 240 verifies a read signal received from the personal information protection target through the personal information protection target terminal 200.

The authentication unit 240 may determine the right to read by various methods. For example, the right to read may be determined by comparing reading information including location information and a request time of the personal information protection target with the capturing information of the drone 100.

The authentication unit 240 may seal and encrypt information to prevent the collected personal information, the captured image and image information, the capturing information, the flight information, or the information stored in the storage unit 260 from being exposed to unspecific people.

When the communication unit 220 receives a personal information processing signal about processing of personal information included in an image from the personal information protection target through the personal information protection target terminal 300, the processing unit 250 processes the image according to the received personal information processing signal.

Here, the personal information processing signal may include various processing signals of personal information. For example, the personal information processing signal may include at least one selected from the group consisting of deletion processing, masking processing, mosaic processing, and blurring processing of personal information.

The storage unit 260 stores information received from the controller 210, the communication unit 220, the collection unit 230, the authentication unit 240, and the processing unit 250. For example, while a pilot flies the drone 100, the storage unit 260 may store an image captured by the drone 100 and image information thereof, capturing information, and flight information. The storage unit 260 may store personal information collected from the authentication unit 240.

The storage unit 260 may be implemented by various apparatuses. For example, the storage unit 260 may be implemented as a volatile memory or non-volatile memory. Here, the volatile memory may be implemented as dynamic random access memory (DRAM), static random access memory (SRAM), thyristor RAM (T-RAM), zero capacitor RAM (Z-RAM), twin transistor RAM (TTRAM), or the like. The non-volatile memory may be implemented as electrically erasable programmable ROM (EEPROM), flash memory, magnetic RAM (MRAM), spin-transfer torque MRAM, ferroelectric RAM (FeRAM), phase change RAM (PRAM), resistive RAM, nanotube RRAM, polymer RAM (PoRAM), nano floating gate memory (NFGM), holographic memory, a molecular electronics memory device, or insulator resistance change memory.

The storage unit 260 may mean a functional and structural combination of software and hardware for storing a relational data base management system (RDBMS), an object-oriented database management system (OODBMS), and the like.

Here, a database of the storage unit 260 may be implemented as at least one table. The storage unit 260 may be implemented by various methods, such as forms of a linked-list, a tree, a relational database, and the like, and include all data storage media and data structures capable of storing data corresponding to a database.

The analysis unit 270 analyzes whether an image includes personal information. As such, a result analysed by the analysis unit 270 may be stored in the storage unit 260 and transmitted to the drone 100 or the pilot terminal 110.

### (Embodiment 3)

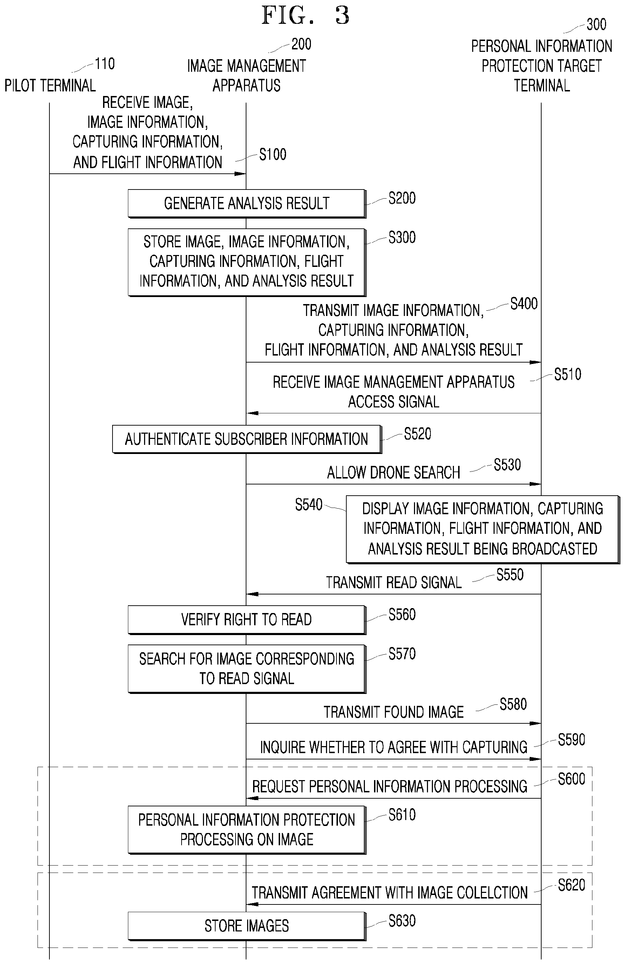

A method of managing an image captured by a drone according to an embodiment of the present disclosure includes, as exemplarily shown in FIG. 3, receiving an image and image information (S100), generating an analysis result (S200), storing the image, the image information, and the analysis result (S300), and transmitting the image information and the analysis result (S400).

The receiving of the image and the image information (S100) may refer to receiving, by the image management apparatus 200, an image of capturing a subject and image information about the image generated by the drone 100, from the drone 100 or the pilot terminal 110 through the network 400, by wired or wireless communication.

The receiving of the image and the image information (S100) may include receiving capturing information and flight information generated by the drone 100 from the drone 100 or the pilot terminal 110 through the network 200, by wired or wireless communication. The image, the image information, the capturing information, and the flight information may be received directly from the drone 100 without passing through the pilot terminal 110.

The generating of the analysis result (S200) may refer to generating, by the image management apparatus 200, a result of analysis of whether the received image includes personal information.

The storing of the image, the image information, and the analysis result (S300) may refer to storing the image and image information received from the drone 100 or the pilot terminal 110 and an analysis result of analyzing, by the image management apparatus 200, whether the image includes personal information.

The storing of the image, the image information, and the analysis result (S300) may further include storing the capturing information and flight information received from the drone 100 or the pilot terminal 110.

The transmitting of the image information and the analysis result (S400) may refer to transmitting the image information received from the drone 100 or the pilot terminal 110 and the analysis result generated by the image management apparatus 200 to the personal information protection target through the personal information protection target terminal 300.

The transmitting of the image information and the analysis result (S400) may further include, when the analysis result includes that the image includes personal information, the image including the personal information to the personal information protection target through the personal information protection target terminal 300.

The method of managing an image captured by a drone according to the present embodiment may further include authenticating a right to read (S500), when subscriber information needed to read the image information is received from the personal information protection target through the personal information protection target terminal 300. For example, the image management apparatus 200 receives through the personal information protection target terminal 300 a signal of the personal information protection target accessing a webpage or an application provided by the image management apparatus 300 (S510). The image management apparatus 200 may perform an authentication process on the subscriber information subscribed to the webpage or application service (S520).

When the authentication of subscriber information is complete, the image management apparatus 200 allows the personal information protection target to search for the drone 100 flying and capturing an image around the personal information protection target terminal 300, through the personal information protection target terminal 300 (S530). Then, image information, capturing information, flight information and analysis result, which are broadcasted by the drone 100 through a pre-allocated channel, are displayed on the personal information protection target terminal 300 (S540),

The personal information protection target may specify the drone 100 that captures or is expected to capture an image of the personal information protection target, from the image information, capturing information, and flight information displayed on the personal information protection target terminal 300. The image management apparatus 200 may separately display, through the webpage or application, the drone 100 that captures or is expected to capture an image of the personal information protection target, based on the location of the personal information protection target terminal 300, the capturing information (a camera direction, a capturing time, a capturing location, and the like) and flight information (the location, altitude, and the like of a drone) of the drone 100.

Next, the personal information protection target transmits, to the image management apparatus 200, a read signal to read the image being captured or has captured by the drone 100 that is selected, through the personal information protection target terminal 300 (S550).

Then, the image management apparatus 200 verifies whether the personal information protection target terminal 300 has a right to read the image, based on the read signal of the personal information protection target terminal 300 (S560). For example, the image management apparatus 200 checks a read signal including location information, a request time, and the like of the personal information protection target, through the personal information protection target terminal 300, and compare with capturing information, such as a capturing location, a capturing time, a capturing direction, and the like of the drone 100. When the reading information matches the capturing information, that is, when, in a specific time section, the personal information protection target terminal 300 is checked to be located within a range in which the camera of the drone 100 captures an image, the image management apparatus 200 determines that the personal information protection target terminal 300 has a right to read.

When the reading information does not match the capturing information, that is, when, in the entire time section, for example, 24 hours, the personal information protection target terminal 300 is not checked to be located within a range in which the camera of the drone 100 captures an image, the image management apparatus 200 does not determine that the personal information protection target terminal 300 has a right to read. In this case, the image management apparatus 200 may notify the personal information protection target that the personal information protection target has no right to read the image, through the personal information protection target terminal 300.

When the personal information protection target terminal 300 has a right to read, the image management apparatus 200 searches the database of the storage unit 260 for an image corresponding to the read signal of the personal information protection target (S570). The image management apparatus 200 searches for an image of which reading is requested, based on the search conditions of location information, time information, and the like included in the read signal.

Here, when the personal information protection target reads the image, the controller 210 may manage history about reading information for each of the personal information protection target terminal 300. For example, the controller 210 may manage the history of when, where, who, and what files were collected, stored, read, provided, and deleted.

Furthermore, the controller 210 may easily call a requested image by mapping the image with the personal information authenticated by the authentication unit 240. For example, the controller 210 may classify captured images for each time, storing place, identification information (face and the like..classification of identifiers and attributors), non-identification information (clothes color and the like), and thus, load the image through the mapping information on the request of reading or destroying personal information.

When an image corresponding to the read signal is found, the image management apparatus 200 may transmit the found image to the personal information protection target through the personal information protection target terminal 100 (S580).

Next, the image management apparatus 200 inquires of the personal information protection target whether to agree with capturing the image, through the personal information protection target terminal 100 (S590).

The personal information protection target may not agree with the collection of the image to prevent privacy infringement. Then, the personal information protection target may request the image management apparatus 200 personal information protection processing, such as deletion processing, masking processing, or the like, on the image, through the personal information protection target terminal 300 (S600).

When a personal information protection processing signal, such as deletion, masking processing, or the like, on the image is received from the personal information protection target through the personal information protection target terminal 300, the image management apparatus 200 performs personal information protection processing, such as deletion, masking processing, or the like, on the image (S610).

In contrast, the personal information protection target may determine that there is no concern about privacy infringement on the image, and agree with the collecting the image. In this case, the image management apparatus 200 may receive image collection agreement information from the personal information protection target through the personal information protection target terminal 300 (S620).

As such, the image management apparatus 200 may guarantee individual basic rights regarding massive collection of personal information that is high risk data and is sensitive, by performing an agreement process of image collection.

When the personal information protection target agrees with the collecting the image, the image management apparatus 200 may store the image (S630). The image management apparatus 200 may manage and store the captured images by classifying into "images accompanied with agreement," "images with agreement not yet completed," "unagreed images," "images with agreement not required," and the like.

When agreement is obtained from all subjects included in an image, the image is classified as an "image accompanied with agreement." When agreement is obtained from only some of the subjects included in image information, the image is classified as an "image with agreement not yet completed." When agreement is obtained from none of the subjects included in image information, the image is classified as an "unagreed image." Furthermore, for an image that does not need agreement and has a notification duty only, the image may be classified as an "image with agreement not required." For example, images captured for the purpose of security correspond to the "images with agreement not required" that does not require individual agreement.

Furthermore, the image management apparatus 200 may process the collected images by giving them the processing purpose, storage periods, deletion grounds, disclosure status, protection measures, persons in charge of management, agents, data protection officers (DPO), and the like. The image management apparatus 200 may notify all operations performed on personal information, such as collecting, recording, structuring, storing, transforming, retrieving, using, transmitting, disclosing, deleting, and the like of the captured images, and manage the image according to the agreement procedure.

While the disclosure has been particularly shown and described with reference to preferred embodiments using specific terminologies, the embodiments and terminologies should be considered in descriptive sense only and not for purposes of limitation. Therefore, it will be understood by those of ordinary skill in the art that various changes in form and details may be made therein without departing from the spirit and scope of the disclosure as defined by the following claims.

### INDUSTRIAL APPLICABILITY

The present disclosure may be used for a method, apparatus, and system for managing an image captured by a drone.

## Claims

1. A system for managing an image captured by a drone, the system comprising:
a drone configured to capture an image of a subject, generate image information about a captured image, and transmit an image and image information by wired or wireless communication;
an image management apparatus configured to receive the image and the image information from the drone, store the received image and image information, analyze whether the image includes personal information, and transmit the image information by wired or wireless communication; and
a personal information protection target configured to receive the image information from the image management apparatus, and transmit a read signal of reading the image information to the image management apparatus by wired or wireless communication.

2. The system of claim 1, wherein the drone is further configured to generate capturing information and flight information and transmit the generated capturing information and flight information by wired or wireless communication.

3. The system of claim 2, wherein the capturing information comprises at least one selected from the group consisting of a capturing location, a capturing time, and a capturing direction.

4. The system of claim 2, wherein the flight information comprises at least one selected from the group consisting of a flight location, a camera direction, an angle, a location of a pilot, an azimuth, a speed, acceleration, a rotation angle, take-off, landing, a flight path, a flight time, an altitude, and the like of the drone.

5. The system of claim 1, wherein the drone is further configured to receive a read signal of the personal information protection target from the image management apparatus.

6. The system of claim 1, wherein the image management apparatus is further configured to receive a read signal from the personal information protection target and transmit the received read signal to the drone.

7. The system of claim 1, wherein, when it is analyzed that the image does not include personal information, the image management apparatus is further configured to transmit an analysis result to the drone.

8. The system of claim 1, wherein, when it is analyzed that the image includes personal information, the image management apparatus is further configured to transmit the image including the personal information to the personal information protection target.

9. The system of claim 1, wherein, after checking the image information, the personal information protection target is further configured to receive an image from the image management apparatus to check whether the image includes personal information.

10. The system of claim 9, wherein the personal information protection target is further configured to pass in advance an authentication process of the image management apparatus to receive an image from the image management apparatus.

11. The system of claim 9, wherein, when the received image includes personal information, the personal information protection target is further configured to transmit a personal information processing signal about personal information processing to the image management apparatus.

12. The system of claim 11, wherein the personal information processing signal comprises at least one selected from the group consisting of deletion processing, masking processing, mosaic processing, and blurring processing of the personal information.

13. The system of claim 11, wherein the image management apparatus is further configured to transmit an image processed according to the personal information processing signal received from the personal information protection target, to the personal information protection target.

14. The system of claim 9, wherein, when the received image does not include personal information, the personal information protection target is further configured to transmit a personal information non-inclusion signal about personal information non-inclusion to the image management apparatus.

15. The system of claim 14, wherein the personal information non-inclusion signal comprises not transmitting the personal information non-inclusion signal to the image management apparatus.

16. An apparatus for managing an image captured by a drone, the apparatus comprising:
a communication unit configured to transceive information with respect to a drone and a personal information protection target by wired or wireless communication;
a collection unit configured to collect an image of capturing a subject and image information about the image from the drone, and collect a read signal of reading the image information from the personal information protection target;
an analysis unit configured to analyze whether the image includes personal information;
a storage unit configured to store the image, the image information, an analysis result, and the read signal; and
a controller configured to control the communication unit, the collection unit, the analysis unit, and the storage unit.

17. The apparatus of claim 16, wherein the collection unit is further configured to receive capturing information and flight information from drone.

18. The apparatus of claim 17, wherein the capturing information comprises at least one selected from the group consisting of a capturing location, a capturing time, and a capturing direction.

19. The apparatus of claim 17, wherein the flight information comprises at least one selected from the group consisting of a flight location, a camera direction, an angle, a location of a pilot, an azimuth, a speed, acceleration, a rotation angle, take-off, landing, a flight path, a flight time, an altitude, and the like of the drone.

20. The apparatus of claim 16, wherein, when the analysis unit analyzes that the image does not include personal information, the controller is further configured to allow the analysis result to be transmitted to the drone.

21. The apparatus of claim 16, wherein, when the analysis unit analyzes that the image includes personal information, the controller is further configured to allow the image including the personal information to be transmitted to the personal information protection target.

22. The apparatus of claim 16, wherein the controller is further configured to control such that capturing information and flight information are found according to a search condition through a terminal screen of the personal information protection target, and to perform an integral management on processing of image information displayed on the terminal of the personal information protection target.

23. The apparatus of claim 22, wherein the search condition of the capturing information and the flight information comprises at least any one of a specific time, a specific location, and unique code information of the drone.

24. The apparatus of claim 16, further comprising an authentication unit configured to authenticate subscriber information received from the personal information protection target, and authenticate a read signal to check a right to read.

25. The apparatus of claim 24, wherein the authentication unit is further configured to determine the right to read by comparing reading information comprising location information and a request time of the personal information protection target with the capturing information of the drone.

26. The apparatus of claim 16, further comprising a processing unit configured to process an image according to a personal information processing signal about processing of the personal information included in the image, the personal information processing signal being received by the communication unit from the personal information protection target.

27. The apparatus of claim 26, wherein the personal information processing signal comprises at least one selected from the group consisting of deletion processing, masking processing, mosaic processing, and blurring processing of the personal information.

28. A method of managing an image captured by a drone, the method comprising:
capturing an image of a subject, generating image information about a captured image, and receiving the image and the image information from the drone that transmits the image and the image information by wired or wireless communication;
generating an analysis result of analyzing whether the image received from the drone includes personal information;
storing the image, the image information, and the analysis result; and
transmitting the image information and the analysis result to a personal information protection target by wired or wireless communication.

29. The method of claim 30, further comprising, when the analysis result includes that the image includes personal information, transmitting the image including the personal information to the personal information protection target.

30. The method of claim 30, further comprising authenticating subscriber information received from the personal information protection target, and authenticate a read signal to check a right to read.

31. The method of claim 30, wherein the authenticating of the read signal comprises determining the right to read by comparing reading information comprising location information and a request time of the personal information protection target with the capturing information of the drone.

32. The method of claim 30, further comprising receiving a personal information processing signal about processing of the personal information included in the image from the personal information protection target.

33. The method of claim 32, wherein the personal information processing signal comprises at least one selected from the group consisting of deletion processing, masking processing, mosaic processing, and blurring processing of the personal information.
